# EUROPEAN PATENT SPECIFICATION

(11) **EP 1 219 484 B1**
(45) Date of publication and mention of the grant of the patent: **02.06.2004**
(21) Application number: 01500092.0
(22) Date of filing: 03.04.2001
(51) Int. Cl.: B60J 5/06, B60P 3/20

(54) **Refrigerated box for lorries, trailers and semi-trailers**
Kühlbox für Lastkraftwagen, Anhänger und Sattelträger
Caisse frigorifique pour camions, remorques et semi-remorques

(30) Priority: 28.12.2000 ES 200003210 U
(43) Date of publication of application: 03.07.2002
(73) Proprietor: Miro Bravo, Vicente, 03800 Alcoy (Alicante) (ES)
(72) Inventor: Miro Bravo, Vicente, 03800 Alcoy (Alicante) (ES)
(74) Representative: Isern Jara, Nuria

(56) References cited:
- EP-A- 0 925 975
- EP-A- 1 174 297
- DE-A- 2 611 141
- DE-A- 19 604 285
- DE-A- 19 935 009
- FR-A- 2 580 598

## Description

### Field of the invention

The present invention refers to a dual access refrigerator body for lorries, trailers and semi-trailers, according to the preamble of claim 1, offering important innovations and advantages in comparison to the refrigerator bodies presently used for transporting goods at low temperatures. A refrigerator body of this kind is disclosed in FR 2 580 598 A.

More specifically, the new refrigerated body consists of a refrigerated box to transport goods at low temperatures, preferably up to -30° C. The structure and one side wall of the body are made of rigid, high insulation panels. The other side wall, which is covered by a foldable insulating canvas, can be opened by sliding the canvas lengthways along the side. Therefore, the inner space of the body can be accessed through this open side.

### Background of the invention

There are known several refrigerated vehicles which are conditioned for conveying goods and/or deep-frozen products at low temperatures. The bodies of such vehicles have been adapted to ensure that the load is thermally insulated from the outdoors. The desired conditions are achieved by the appropriate refrigerating units.

The bodies currently available on the market include models with rigid external walls as well as models with two side walls made of foldable insulating canvas.

Refrigerator bodies with rigid walls offer highly satisfactory thermal insulation. They can be used for transport of deep-frozen goods at temperatures to -30° C. However, the disadvantage of this type of body is that the inner space is accessed through two rear doors on the body. Therefore, it is difficult to load and unload the goods located in the front of the body. First, the products located between such goods and the rear access doors must be removed. These lorries are useful for conveying entire loads from a single point of origin to a single destination.

Vehicles equipped with a cover made entirely of thermal insulating canvas offer an alternative to vehicles with rigid wall refrigerator bodies. On such vehicles, both side walls are covered by special, high performance canvas. Therefore, the walls can be opened. The canvas prevents most of the cold from being transferred from inside the body to outdoors. Moreover, the canvas is moveable. It can be loosened by adjusting the fastening devices on the body base. Therefore, any part of the body can be accessed, regardless of the position of the goods inside the containing space. In fact, the canvas can be moved from any point along the body. Goods can be loaded or unloaded from any location within the body with no need to move the rest of the load.

The main disadvantage of these bodies with side canvas is the thermal protection, since the thermal insulation coefficient of the canvas is not as high as that of the rigid panels. Lorries in which all of the side walls are covered with canvas can only be adapted for cold-storage transport up to 0° C.

### Description of the invention

The heavy-duty refrigerator body for lorries, trailers and semi-trailers referred to in this patent is equipped with side walls made of rigid, sandwich type, high insulation material, except one side of the body that is covered by a foldable insulating canvas.

The design of this body reduces heat loss through the canvas, since the side walls which have not been designed to be opened are made of rigid insulating material with a high insulation coefficient. The single side wall covered with canva,s provides access to the body at any point along the entire length of the base. Therefore, the vehicle can be used to convey loads from different points of departure to different destinations. This prevents unnecessary movement of the parcels being transported and facilitates the loading and unloading process.

The panels used for the side walls of the body are preferably sandwich or composite panels. Due to their high efficiency, the panels reduce the heat transfer and ensure that the overall loss of cold energy produced by the refrigerating unit is reduced to a minimum. Therefore, the cold-storage temperature inside the body is much lower than that which would be achieved in a body with all side walls covered only by canvas.

This new refrigerator body is much more efficient than previous models. It can even transport deep-frozen goods at temperatures up to -30° C, in compliance with the applicable industrial transport regulations.

The canvas can be moved along the entire length of the side wall. This canvas may be a single unit which covers the entire wall, or several segments linked to one another which provide access to specific sections inside of the body without uncovering the rest of the load. The straps and fastening devices on the lower edge of the canvas, or plate and hook systems similar to that mentioned in the applicant's Spanish Utility Model No. U2000.01018 can be used to secure the canvas quickly and firmly to the side frame of the body.

This new body design is more efficient than a refrigerated box which is covered entirely with thermal insulating canvas. Less energy is required to maintain the low temperature of the load. Therefore, it also provides fuel savings.

With the new body design, load parcels can be handled at any point along the length of the body, regardless of the existing load. This offers users greater flexibility in transporting products and improved use of space.

The following offers an exemplary description of specific preferred applications of the invention. Figures have been included to facilitate understanding of the characteristics mentioned.

### Brief description of the design

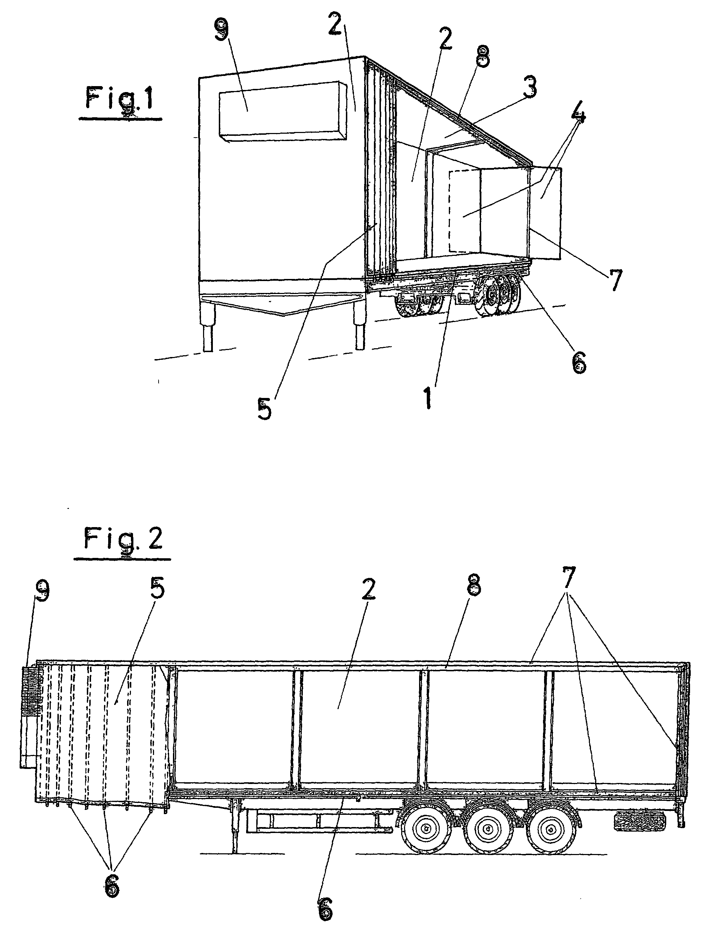

Figure 1 is a perspective view of the refrigerator body design proposed by the invention, installed on a semitrailer base.
Figure 2 is a side view of the new refrigerator body design.

### Description of a preferred embodiment

The figures illustrate one of several possible applications of the invention, and the references made below refer to the numbering used in these figures.

The invention consists of a refrigerator body for lorries, trailers or semi-trailers formed by a base (1) and several side walls (2) made of rigid insulating material, preferably sandwich or composite panels. The body is covered by a roof (3) which is also made of insulating material. There are two conventional cold-storage doors (4) in the rear.

One of the sides of the body is equipped with an open, heavy-duty structural frame (7) which supports a sliding, insulating canvas (5). The canvas (5) moves along a guiding device (8) installed on the upper stretch of the frame (7) and the lower part of the roof (3). It is secured to the lower stretch of the frame and the base (1) by a fastening device (6), which can also be used to adjust the canvas (5) so that is tautly joined to the frame (7).

The refrigerating unit (9) is attached to one of the rigid panels (2) by traditional methods.

## Claims

1. Dual access refrigerator body for lorries, trailers or semi-trailers for transporting goods at temperatures up to -30°C formed by a base (1), several side walls (2) and a roof (3) made of rigid insulating material, preferably sandwich or composite panels, which form the heavy-duty thermal insulation structure for the body, the inner area of the body being reachable by the conventional rear acces through the rear doors, a durable structural frame being on only one of the side walls of the body which is open along its entire length, **characterised in that** a foldable insulating canvas is attached to and fitted snugly on the frame, and **in that** the canvas can be moved to allow additional side acces to the inner area of the body along the entire length of the base.

2. Dual access refrigerator body for lorries, trailers and semi-trailers, according to claim 1, **characterized in that** the thermal insulation canvas (5) can slide lengthways along at least one guiding device (8) installed in the upper stretch of the frame (7) and/or the lower part of the roof (3), **in that** the canvas (5) is fastened to the lower side of the frame (7) with any sort of fastening device (6) such as straps, hooks or similar devices, and **in that** the rear stud of the frame (7) in the rear section of the body supports the pivoting of the rear doors (4).

## Patentansprüche

1. Kühlaufbau mit doppeltem Zugang für LKWs, Anhänger und Sattelanhänger für den Transport von Artikeln bei Temperaturen von bis zu -30° C, bestehend aus einem Boden (1), mehreren Seitenwänden (2) und einem Dach (3), hergestellt aus steifem Isoliermaterial, vorzugsweise aus Paneelen in Sandwich- oder Kombibauweise, welche die gewichtige thermische Isolationsstruktur für den Aufbau bilden, wobei das Aufbauinnere über einen herkömmlichen hinteren Zugang durch die Hecktüren zugänglich ist, und wobei ein dauerhafter Strukturrahmen nur an einer der Seitenwände des Aufbaus bestehen bleibt, welcher über die gesamte Aufbaubreite geöffnet ist, **dadurch gekennzeichnet, dass** eine isolierende, faltbare Thermoplane auf dem Rahmen fixiert und straff angepasst ist, und dass diese Plane verschoben werden kann, um einen zusätzlichen seitlichen Zugang ins Aufbauinnere über die gesamte Bodenlänge zu ermöglichen.

2. Kühlaufbau mit doppeltem Zugang für LKWs, Anhänger und Sattelanhänger nach Anspruch 1, **dadurch gekennzeichnet, dass** die thermische Isolierplane (5) in Längsrichtung entlang einer im oberen Abschnitt des Rahmens (7) und/oder auf der Unterseite des Dachs (3) angebrachten Führung (8) verschiebbar ist, und dass die Plane (5) auf der Innenseite des Rahmens (7) mit einer beliebigen Befestigungsvorrichtung (6), wie etwa Riemen, Haken oder dergleichen, befestigt ist, und dass die hinteren Stützen des Rahmens (7) im Heck des Aufbaus die Scharniere der Hecktüren (4) tragen.

## Revendications

1. Carrosserie frigorifique de double accès pour camions, remorques ou semi-remorques, pour le transport d'articles à températures jusqu'à -30° C, constituée par une base (1), plusieures parois latérales (2) et un plafond (3), réalisée en un matériel isolant rigide, de préférence de panneaux sandwich ou combinés, qui forment une structure d'isolation thérmique pesante pour la carrosserie, dans laquelle on peut accéder a la zone interne de la carrosserie par l'accès postérieur conventionnel à travers les portes arrières, ne restant disposée une charpente structurelle durable que pour une des parois latérales de la carrosserie, laquelle est ouverte sur toute sa longueur, **caractérisée en ce qu'** une bâche frigorifique isolante et pliante est intimement liée et ajustée à la charpente, et **en ce que** ladite bâche peut être déplacée afin de permettre un accès latéral additionnel à la zone interne de la carrosserie sur la totalité de la longueur de sa base.

2. Carrosserie frigorifique de double accès pour camions, remorques ou semi-remorques selon la revendication 1, **caractérisée en ce que** la bâche d'isolation thérmique (5) peut glisser en direction longitudinale le long d'un dispositif de guidage (8) monté sur la partie supérieure de la charpente (7) et/ou sur la partie inférieure du plafond (3), et **en ce que** ladite bâche (5) est fixée au côté inférieur de la charpente (7) moyennant un dispositif de fixation (6) de n'importe quel type, tel que des courroies, crochets ou similaires, et **en ce que** les montants postérieurs de la charpente (7) dans la partie postérieure de la carrosserie supportent le pivotement des portes arrières (4).
